# EUROPÄISCHE PATENTSCHRIFT

(11) **EP 1 121 206 B1**
(45) Veröffentlichungstag und Bekanntmachung des Hinweises auf die Patenterteilung: **11.05.2005**
(21) Anmeldenummer: 00953188.0
(22) Anmeldetag: 21.08.2000
(51) Int. Cl.: B08B 3/12, B60S 3/04

(54) **REINIGUNGSEINRICHTUNG FÜR ROTATIONSSYMMETRISCHE KÖRPER**
CLEANING DEVICE FOR ROTATIONALLY SYMMETRICAL BODIES
UNITE DE NETTOYAGE POUR CORPS A SYMETRIE DE REVOLUTION

(30) Priorität: 22.08.1999 DE 19939899
(43) Veröffentlichungstag der Anmeldung: 08.08.2001
(73) Patentinhaber: Wohlgemuth GmbH, 12249 Berlin (DE)
(72) Erfinder: Wohlgemuth, Oliver, 12249 Berlin (DE)
(74) Vertreter: Kirschner, Klaus Dieter, Dipl.-Phys.
(86) Internationale Anmeldenummer: PCT/EP2000/008138
(87) Internationale Veröffentlichungsnummer: WO 2001/014072

(56) Entgegenhaltungen:
- WO-A-90/11210
- DD-A- 286 524
- DE-A- 4 038 662
- GB-A- 2 148 862

## Beschreibung

Die Erfindung betrifft eine Reinigungseinrichtung für rotationssymmetrische Körper, insbesondere von bereiften oder unbereiften Autofelgen, sowohl aus Stahl als auch aus Aluminium, zur mechanischen Reinigung mittels einer bewegten Reinigungsflüssigkeit in einer Reinigungswanne.

Die Reinigung von Autofelgen erfolgt in der Praxis abhängig von den Dimensionen derselben. Während die Reinigung von LKW-Felgen fast ausnahmslos am Fahrzeug erfolgt, werden PKW-Felgen sowohl am Fahrzeug angebaut als auch unabhängig vom Fahrzeug, d.h. getrennt und jede Felge einzeln gereinigt. Die Reinigung erfolgt manuell mittels Flüssigkeit und vorwiegend unter Einsatz von Hochdruckreinigungsgeräten. Als Reinigungsflüssigkeit wird Wasser mit Reinigungszusätzen eingesetzt. Nachteilig wirkt sich bei dem angewandten Reinigungsablauf der hohe Bedarf an Wasser als Reinigungsflüssigkeit neben dem hohen Zeitaufwand aus. Außerdem ist der Reinigungseffekt abhängig vom Verschmutzungsgrad der bereiften oder unbereiften Felgen häufig nach einem ersten Reinigungsgang unbefriedigend. Außerdem wird durch die manuelle Reinigung die Oberfläche einer Felge beschädigt.

Aus der DD 286 524 A5 ist eine Anordnung zum Reinigen von Kraftfahrzeugen bekannt, mit der verschmutzte oder beschichtete, großvolumige Körper , insbesondere Kraftfahrzeuge, gereinigt werden können. Schmutzschichten, wie Fett, Öl, Straßenschmutz und Korrosionsschichten, werden durch Ultraschallkavitation in flüssigen Medien von den Kraftfahrzeugen entfernt. Hierzu wird eine Wanne aus Stahl, in der sich ein flüssiges Reinigungsmedium befindet, mit einem zeitgesteuerten Ultraschallschwinger gekoppelt, wobei das Kraftfahrzeug mittels Ultraschallkavitation gereinigt wird.

Aus der WO 90/11210 ist eine Wascheinrichtung zum Waschen von Fahrzeugreifen bekannt, die ein Gehäuse aufweist, welches einen Waschraum bildet, in dem der Reifen untergebracht wird. Düsen sind vorgesehen, um den Reifen in dem Gehäuse zu mit einer mit Ultraschallwellen beaufschlagten Reinigungsflüssigkeit zu besprühen. Eine Pumpe liefert die Waschflüssigkeit an die Düsen. Eine Düse ist auf jeder Seite des Reifens angeordnet, und die Düsen werden durch den mittleren Teil und der äußeren Peripherie des Reifens hin und her bewegt.

Aus der DE 40 38 662 A1 ist eine Reinigungseinrichtung für Kraftfahrzeuge bekannt, bei der Wasserströme mit entsprechend hoher Bewegungsenergie auf den zu reinigenden Gegenstand gerichtet werden, wobei den Wasserströmen zusätzlich zur Bewegungsenergie eine Schwingungsenergie in Bewegungsrichtung des strömenden Wassers aufgeprägt wird. Die Schwingungsenergie kann als Ultraschallenergie aufgeprägt werden.

Aus der GB 2 148 862 A ist eine Reinigungsvorrichtung für Bierfässer bekannt, bei der Reinigungsflüssigkeit in das Bierfass eingeleitet wird und die Reinigung durch Ultraschallwirkung erfolgt. Dazu wird das Fass mit Reinigungsflüssigkeit gefüllt, und ein Ultraschallgenerator wird in die Reinigungsflüssigkeit eingeführt.

Der Erfindung liegt die Aufgabe zugrunde, eine Reinigungseinrichtung bereitzustellen, mit der der an einem rotationssymmetrischen Körper, insbesondere an bereiften oder unbereiften Autofelgen, anhaftende Schmutz wirkungsvoll mit einfachen Mitteln mit einem geringen Aufwand an manueller Arbeit und mit einem geringen Zeitaufwand entfernt werden kann.

Diese Aufgabe wird durch die Reinigungseinrichtung nach dem Hauptanspruch gelöst. Der Einsatz der erfindungsgemäßen Reinigungseinrichtung bewirkt, daß der an einer zu reinigenden Fahrzeugrad/Autofelge und an der gegebenenfalls vorhandenen Fahrzeugbereifung, anhaftende Schmutz schonend für das Felgenmaterial und die Bereifung wirkungsvoll mit einem geringen Anteil an manueller Arbeit abgetragen werden kann. Außerdem wird der Einsatz von Reinigungsflüssigkeit auf ein Minimum herabgesetzt. Durch die Halte-/Aufnahmeeinrichtung kann eine bereifte oder unbereifte Felge, bequem in das Reinigungsbad eingetaucht und aus diesem wieder herausgeführt werden. Falls es sich bei dem rotationssymmetrischen Körper um eine Felge mit Reifen handelt, wobei das spezifische Gewicht der Felge mit dem Reifen geringer ist als Wasser, kann durch die Halte-/Aufnahmeeinrichtung auch erreicht werden, daß die Felge mit dem Reifen komplett in das Reinigungsbad eingetaucht werden kann. Durch die Schwingungserreger an der Aufnahmevorrichtung wird auch die Innenseite der Felge gereinigt.

Eine vorteilhafte Ausgestaltung der erfindungsgemäßen Reinigungseinrichtung ist gekennzeichnet durch eine Heizeinrichtung für die Reinigungsflüssigkeit. Durch Aufheizen der Reinigungsflüssigkeit wird die Reinigungswirkung der Reinigungsflüssigkeit erhöht.

Eine weitere vorteilhafte Ausgestaltung der erfindungsgemäßen Reinigungseinrichtung ist dadurch gekennzeichnet, daß der Schwingungserreger aus einem piezoelektrischen Wandler besteht. Es gibt eine Reihe von Möglichkeiten, um eine Flüssigkeit mit Ultraschallschwingungen zu erregen, wobei jedoch piezoelektrische Wandler zu diesem Zweck eine preiswerte und robuste zuverlässige Lösung darstellen.

Eine weitere vorteilhafte Ausgestaltung der erfindungsgemäßen Reinigungseinrichtung ist dadurch gekennzeichnet, daß die Reinigungswanne wärmeisoliert und/oder schwingungsgedämpft und/oder schallisoliert ausgeführt ist. Eine weitere vorteilhafte Ausgestaltung der erfindungsgemäßen Reinigungseinrichtung ist dadurch gekennzeichnet, daß die Reinigungswanne durch einen wärmeisolierten und/oder schallisolierten und/oder schwingungsgedämpften Deckel verschließbar ist. Damit wird in vorteilhafter Weise einerseits eine Verschmutzung oder anderweitige, beispielsweise durch Wärmeeinwirkung bedingte Beeinträchtigung der Umgebung der Reinigungseinrichtung verhindert, und zum anderen kann der Rotationskörper mit Hilfe des Deckels ebenfalls in der Reinigungsflüssigkeit niedergehalten werden.

Eine weitere vorteilhafte Ausgestaltung der erfindungsgemäßen Reinigungseinrichtung ist dadurch gekennzeichnet, daß der Rotationskörper bzw. die Autofelge drehbar an der Aufnahmeeinrichtung angeordnet ist. Der Rotationskörper kann somit bei dem Reinigungsvorgang gedreht werden, wodurch die Reinigungswirkung verbessert wird, da die Ultraschallwellen an allen Stellen der Felge oder des Rades einwirken können. Es bleiben somit keine spezifischen Verschmutzungsrückstände an dem Rotationskörper zurück.

Eine weitere vorteilhafte Ausgestaltung der erfindungsgemäßen Reinigungseinrichtung ist dadurch gekennzeichnet, daß für den/die auf der Aufnahmeeinrichtung drehbar gelagerte(n) Rotationskörper bzw. Autofelge(n) ein Drehantrieb vorgesehen ist. Prinzipiell könnten die Rotationskörper auch von Hand bei dem Reinigungsvorgang gedreht werden. Ein Drehantrieb, der auch motorisch bestückt sein kann, erleichtert jedoch das Drehen des Rotationskörpers und nimmt somit dem Bedienungsmann Arbeit ab.

Weitere vorteilhafte Ausgestaltungen der erfindungsgemäßen Reinigungseinrichtung sind in den restlichen Unteransprüchen gekennzeichnet.

Ausführungsbeispiele der Erfindung werden nun anhand der beiliegenden Zeichnungen beschrieben. Es zeigen:
Fig. 1 eine schematische Darstellung einer Reinigungseinrichtung im Betriebszustand;
Fig. 2 eine schematische Darstellung der Reinigungseinrichtung von Fig. 1 mit geöffnetem Klappdeckel;
Fig. 3 eine schematische Darstellung der Reinigungseinrichtung aus den Figuren 1 und 2 mit geöffnetem Klappdeckel und aus der Reinigungswanne herausgeschwenkter Halteeinrichtung;
Fig. 4 eine weitere Ausführungsform der die Reinigungseinrichtung in Seitenansicht;
Fig. 5 die Reinigungseinrichtung von Fig. 4 in Draufsicht;
Fig. 6 ein weiteres Ausführungsbeispiel der Reinigungseinrichtung in schematischer Seitenansicht.

Eine Reinigungseinrichtung besteht aus einer Reinigungswanne 1, die mittels eines Klappdeckels 2 verschließbar ist, und einer Halteeinrichtung 3 mit einem Hubarm 9 und einer Aufnahmeeinrichtung 11 zur Aufnahme von mindestens einer Autofelge 4 oder eines kompletten Fahrzeugrades 4 und zwei Schwingungserregern 5. Die Schwingungserreger 5 sind innerhalb der Reinigungswanne 1 nahe jeweils gegenüberliegender Seitenwände 6 derselben angebracht.

Die Reinigungsflüssigkeit wird durch Schwingungserreger in Schwingungen im Ultraschallbereich versetzt bzw. erregt. Die Schwingungsfrequenz liegt vorzugsweise zwischen 25 und 30 kHz. Bei dieser Schwingungsfrequenz wird der Schmutz von der Autofelge bzw. dem Reifen effektiv entfernt.

Die Reinigungswanne 2 besitzt einen Zufluß und einen Abfluß für die benötigte Reinigungsflüssigkeit und ist zum Schutz der Schwingungserreger und zur Stabilisierung ihrer Seitenwände 6 mit einem aus Rechteckprofil gefertigten Rahmen ausgestattet. Sowohl die Reinigungswanne 1 wie auch der Klappdeckel 2 sind wärmeisoliert und/oder schwingungsgedämpft und/oder schallisoliert ausgeführt. Außerdem ist der Klappdeckel 2 mit Industrie-Gasfedem versehen.

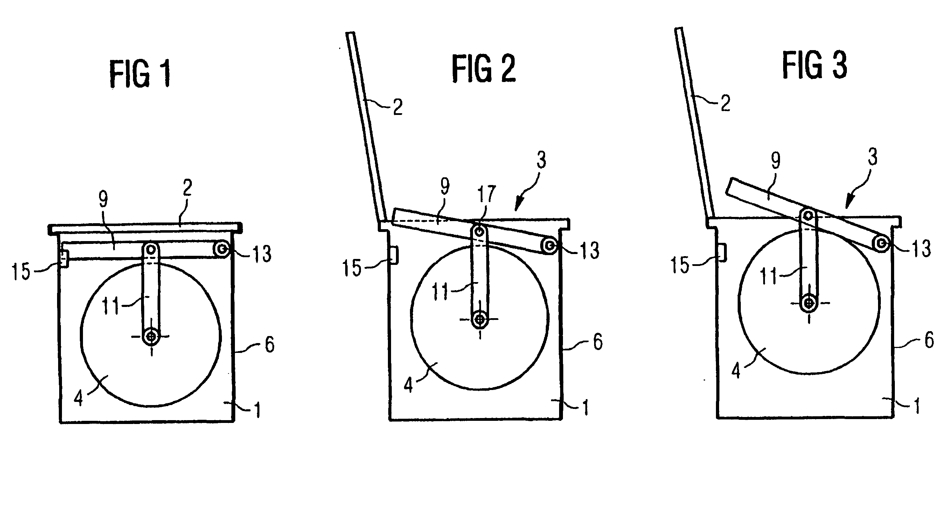

Bei dem Ausführungsbeispiel der Figuren 1 bis 3 weist die Halteeinrichtung 3 einen Hubarm 9 und eine Aufnahmeeinrichtung 11 auf. Der Hubarm 9 ist an einem Ende in einer Halterung 13 schwenkbar gelagert, und sein anderes Ende liegt im geschlossenen Zustand auf einem Gegenlager 15 auf. Die Aufnahmeeinrichtung 11 ist an dem Hubarm 9 ebenfalls über eine Schwenkverbindung 17 schwenkbar verbunden. Mit Hilfe dieser Halteeinrichtung 3 kann somit das Rad 4 bequem in das Reinigungsbad eingetaucht oder aus diesem herausgehoben werden.

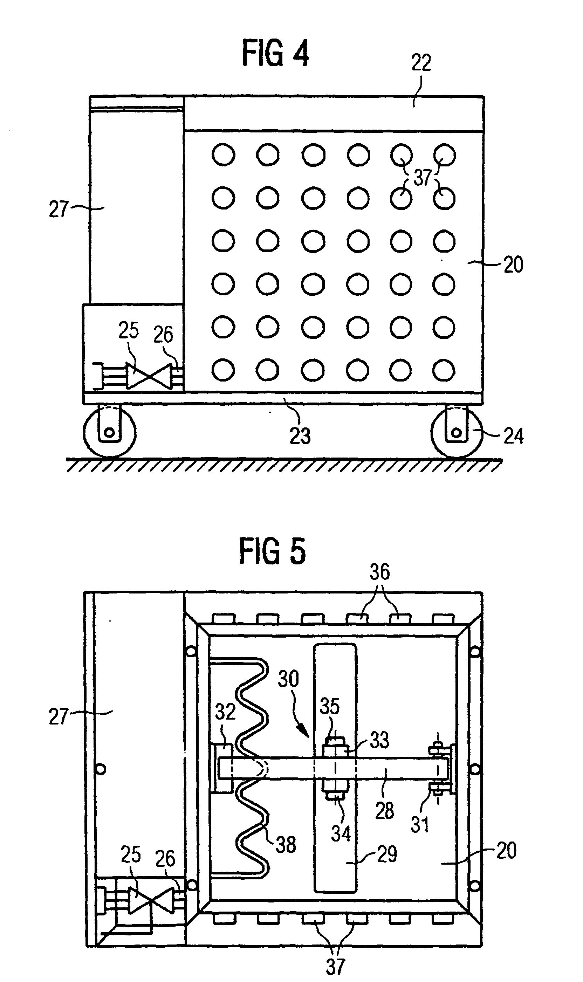

In den Figuren 4 und 5 ist ein weiteres Ausführungsbeispiel der erfindungsgemäßen Reinigungseinrichtung gezeigt. Die Reinigungseinrichtung umfaßt eine Wanne 20 mit einem Deckel 22, einem Rahmen 23, der die Wanne 20 trägt und mit Rädern 24 ausgestattet ist, um ein Auf- und Abladen der Reinigungseinrichtung auf bzw. von einem Transportfahrzeug erleichtem. In den Figuren 4 und 5 ist ein über ein Ventil 25 absperrbarer Abflußanschluß 26 gezeigt. Der Zu- und Abfluß der Reinigungswanne 20 ist mit einem nicht dargestellten Vorratstank verbunden und mit einem ebenfalls nicht dargestellten Reinigungskreislauf für die Reinigungsflüssigkeit mit einem Filterkreislauf und mit einem Ölabscheider.

Wie in Fig. 5 in Draufsicht dargestellt ist, ist an einer Seitenwand der Reinigungswanne 20 von innen eine durch einen manuell schwenkbaren Hubarm 28 und einer Aufnahmeeinrichtung 29 gebildete Halteeinrichtung 30 für eine oder zwei zu reinigende Felgen oder Räder befestigt, die zur Bestückung und Entnahme der Felgen/Räder in die bzw. aus der Reinigungswanne 20 dient und mittels einer Kurbel (nicht gezeigt) in die jeweils erforderliche Stellung geschwenkt werden kann. Die Felgen/Fahrzeugräder sind auf der Aufnahmeeinrichtung drehbar gelagert und mit einem Antrieb (nicht dargestellt) gekoppelt, der die zu reinigenden Felgen/Fahrzeugräder in eine Drehbewegung versetzt.

Der Hubarm 28 ist wiederum an einem Ende an einer Schwenkhalterung 31 schwenkbar gelagert, während das andere Ende des Hubarmes 28 auf einer Auflageeinrichtung 32 aufliegt, wenn der Hubarm 28 in der Betriebsstellung ist. Der Hubarm 28 ist über eine Schwenkverbindung und eine Stange 33 mit der Aufnahmeeinrichtung 29 verbunden, die in diesem Ausführungsbeispiel aus einer Stange mit je einer Aufnahme für ein Rad an beiden Enden ausgebildet ist und im wesentlichen senkrecht zu dem Hubarm 28 ausgerichtet ist.

Wie aus den Figuren 4 und 5 zu ersehen ist, sind zwei Ultraschallwandler 34, 35 an der Aufnahmeeinrichtung 29 derart angeordnet, daß sie bei eingesetzten Rädern die gegenüberliegende Radseite beschallen. Eine Vielzahl von weiteren Ultraschallerregem 36, 37 sind auf der Außenseite der Wanne 20 angeordnet, wie schematisch in Fig. 4 gezeigt ist. Dadurch wird eine flächige Beschallung der jeweils außenliegenden Seiten der Räder gewährleistet.

Auf der Stirnseite der Reinigungseinrichtung befindet sich ein Schaltschrank 27, mit auf dessen Tür montierten elektrischen Kontroll- und Bedienelementen. Im Schaltschrank 27 sind alle elektrischen Bauteile der Reinigungseinrichtung und die Ultraschall-Generatoren der Schwingungserreger 36, 37 untergebracht.

Außerdem verfügt die Reinigungseinrichtung über eine in der Reinigungswanne 20 angeordnete Heizeinrichtung in Form einer Heizschlange 38 für das Aufheizen der Reinigungsflüssigkeit. Es können selbstverständlich auch andere Heizeinrichtungen zum Aufheizen der Reinigungsflüssigkeit eingesetzt werden.

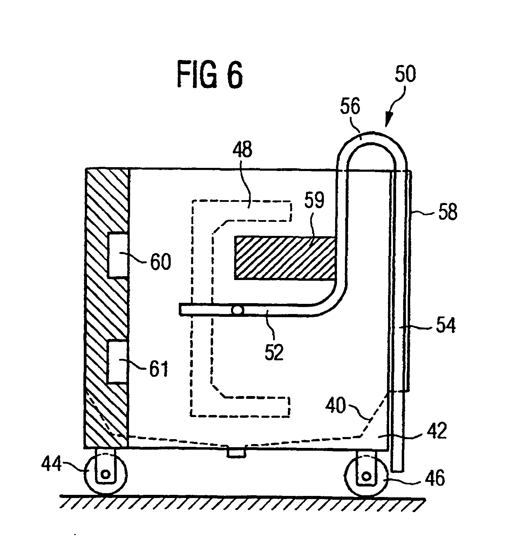

Fig. 6 zeigt ein weiteres Ausführungsbeispiel der erfindungsgemäßen Reinigungseinrichtung mit einer Reinigungswanne 40, die in einem Gestell 42 angeordnet ist, welches mit Rädern 44, 46 versehen ist. Um eine Felge 48 drehbar zu lagern, ist eine Halteeinrichtung 50 vorgesehen, die einen Aufnahmeschenkel 52 und einen Trageschenkel 54 aufweist. der mit dem Aufnahmeschenkel 52 über einen bogenförmigen Abschnitt 56 verbunden ist, der zum Anheben der Halteeinrichtung 50 von Hand dient. Der Trageschenkel 54 ist in einer Halterung 58 auf- und abbewegbar und arretierbar angeordnet. Die Beschallung der Felge 48 erfolgt durch einen Ultraschallerreger 59, der an dem Aufnahmeschenkel 52 angeordnet ist, so daß er die eine Seite der Felge 48 beschallt. Auf der dem Ultraschallerreger 58 gegenüberliegenden Seite der Felge 48 sind eine oder mehrere Ultraschallerreger 60, 61 angeordnet, um die Felge 48 auch von dieser Seite zu beschallen. Es ist ersichtlich, daß die Innenseite der Felge (rechte Seite in Fig. 6) vollständig beschallt wird, wenn die Felge 48 um den Aufnahmearm 52 gedreht wird.

## Patentansprüche

1. Reinigungseinrichtung zur mechanischen Reinigung von bereiften oder unbereiften Autofeigen umfassend eine Reinigungswanne, in der eine Reinigungsflüssigkeit durch mindestens einen Schwingungserreger (5) in eine Turbulenz im Ultraschallbereich versetzenden wird, **gekennzeichnet durch**
eine Halteeinrichtung (3, 30, 50) mit einer ein- und ausschwenkbaren Aufnahmeeinrichtung (11, 29, 52) zur Aufnahme der zu reinigenden Autofelge (4, 48),
und **durch** wenigstens einen an der Aufnahmeeinrichtung (29,52) angeordneten Schwingungserreger zur Beschallung der Innenseite der Autofelge.

2. Reinigungseinrichtung nach Anspruch 1. **dadurch gekennzeichnet, daß** jeder Schwingungserreger (34-37; 59-61) aus einem piezoelektrischen Wandler besteht.

3. Reinigungseinrichtung nach Anspruch 1 oder 2, **dadurch gekennzeichnet, daß** eine Vielzahl von Schwingungserregern (36,37;60,61) an den die Reinigungswanne (20, 40) umschließenden Wänden angeordnet ist.

4. Reinigungseinrichtung nach Anspruch 1 oder 2, **dadurch gekennzeichnet, daß** der/die Schwingungserreger (33,34,36,37; 59,60,61) in der Reinigungswanne (20, 40) vollständig von der Reinigungsflüssigkeit umschlossen angeordnet ist/sind.

5. Reinigungseinrichtung nach Anspruch 1, **dadurch gekennzeichnet, daß** die Reinigungswanne (1, 20. 40) wärmeisoliert und/oder schwingungsgedämpft und/oder schallisoliert ausgeführt ist.

6. Reinigungseinrichtung nach Anspruch 1. **dadurch gekennzeichnet, daß** die Reinigungseinrichtung einen wärmeisolierten und/oder schallisolierten und/oder schwingungsgedämpften Deckel (2, 22) zum Verschließen der Reinigungswanne (1, 20, 40)umfasst.

7. Reinigungseinrichtung nach Anspruch 1, **dadurch gekennzeichnet, daß** die Halteeinrichtung (3, 30, 50) mit der Reinigungswanne (1, 20, 40) fest verbunden ist.

8. Reinigungseinrichtung nach Anspruch 1, **dadurch gekennzeichnet, daß** die Halteeinrichtung (3, 30, 50) als ein getrenntes Bauteil ausgebildet ist, das in einer Aufnahmehalterung in der Reinigungswanne (1,20,40) angeordnet ist.

9. Reinigungseinrichtung nach Anspruch 1, **dadurch gekennzeichnet, daß** die bereifte oder unbereifte Autofelge drehbar an der Aufnahmeeinrichtung angeordnet ist.

10. Reinigungseinrichtung nach Anspruch 9, **dadurch gekennzeichnet. daß** für den/die auf der Aufnahmeeinrichtung drehbar gelagerte(n) Autofelge(n) ein Drehantrieb vorgesehen ist.

## Claims

1. Cleaning apparatus for mechanically cleaning vehicle rims with or without tires, comprising a cleaning bath within which a cleaning fluid is placed into a state of turbulence in the ultrasonic range by at lest one vibrator, **characterized by**:
by a holder (3, 30, 50) having an inwardly and outwardly swiveable receiving device (11, 29, 52) for the rotationally symmetrical bodies (4, 48) to be cleaned,
and by at least one vibrator arranged at the receiving device (29,52) for the acoustic irradiation of the inner side of the motor car rim.

2. Cleaning apparatus according to claim 1, **characterized in that** each vibrator (34 to 37; 59 to 61) consists of a piezoelectric transducer.

3. Cleaning apparatus according to claim 1 or 2, **characterized in that** a plurality of vibrators (36,37;60,61) are arranged on the walls surrounding the cleaning bath (20,40).

4. Cleaning apparatus according to claim 1 or 2, **characterized in that** the vibrator or the vibrators (33,34,36,37;59,60,61) are arranged in the cleaning bath (20, 40) such that they are completely surrounded by the cleaning fluid.

5. Cleaning apparatus according to claim 1, **characterized in that** the cleaning bath (1, 20, 40) is heat isolated and/or oscillation dampened and/or sound isolated.

6. Cleaning apparatus according to claim 1, **characterized in that** the cleaning apparatus comprises a heat isolated and/or sound isolated and/or oscillation dampened cover (2, 22) for closing the cleaning bath (1,20,40).

7. Cleaning apparatus according to claim 1, **characterized in that** the holding device (3, 30, 50) is fixed to the cleaning bath (1, 20, 40).

8. Cleaning apparatus according to claim 1, **characterized in that** the holding device (3, 30, 50) is formed as a separate structural part which is arranged in a receiving holder in the cleaning bath (1, 20, 40).

9. Cleaning apparatus according to claim 1, **characterized in that** the wheel rim with or without tire respectively is arranged rotatably in the receiving device.

10. Cleaning apparatus according to claim 9 **characterized in that** a rotational drive is provided for the wheel rim or rims respectively rotatably supported on the receiving device.

## Revendications

1. Dispositif à nettoyer pour le nettoyage mécanique des jantes auto avec ou sans enveloppe, comprenant une cuve de nettoyage où le fluide de nettoyage est amené dans un état de turbulence dans le domaine des ultrasons par l'intermédiaire au moins d'un générateur d'oscillations (5), **caractérisé par**
- un dispositif porteur (3, 30, 50) avec un dispositif de fixation (11, 29, 52) pivotant dedans et en dehors pour la fixation des jantes auto (4, 48) à nettoyer,
- et par au moins un générateur d'oscillations attaché au dispositif de fixation (29, 52) pour l'irradiation acoustique du côté intérieur de la jante auto.

2. Dispositif à nettoyer selon la revendication 1, **caractérisé en ce que**, chaque générateur d'oscillations (34 - 37, 59 - 61) consiste en un traducteur piézo-électrique.

3. Dispositif à nettoyer selon la revendication 1 ou 2, **caractérisé en ce que**, plusieurs générateurs d'oscillations (36, 37; 60, 61) sont attachés aux parois qui entourent la cuve de nettoyage (20, 40).

4. Dispositif à nettoyer selon la revendication 1 ou 2, **caractérisé en ce que**, le générateur/générateurs d'oscillations (33, 34, 36, 37; 59, 60, 61) est/sont disposés dans la cuve de nettoyage (20, 40), enveloppés complètement par le fluide de nettoyage.

5. Dispositif à nettoyer selon la revendication 1, **caractérisé en ce que**, la cuve de nettoyage (1, 20, 40) est réalisée avec isolation thermique et/ou avec amortissement aux oscillations et/ou avec isolation phonique.

6. Dispositif à nettoyer selon la revendication 1, **caractérisé en ce que**, le dispositif à nettoyer comprend un couvercle (2, 22) avec isolation thermique et/ou avec isolation phonique et/ou avec amortissement aux oscillations, pour la fermeturè de la cuve de nettoyage (1, 20, 40).

7. Dispositif à nettoyer selon la revendication 1, **caractérisé en ce que**, le dispositif porteur (3, 30, 50) est couplé étroitement avec la cuve de nettoyage (1, 20, 40).

8. Dispositif à nettoyer selon la revendication 1, **caractérisé en ce que**, le dispositif porteur (3, 30, 50) est formé comme un élément constructif distinct, disposé dans un support de fixation de la cuve de nettoyage (1, 20, 40).

9. Dispositif à nettoyer selon la revendication 1, **caractérisé en ce que**, la jante auto avec ou sans enveloppe est disposée avec la possibilité de rotation sur le dispositif de fixation.

10. Dispositif à nettoyer selon la revendication 9, **caractérisé en ce que**, pour la jante/jantes auto montée/montées dans les paliers avec la possibilité de rotation sur le dispositif de fixation est prévu un système d'entraînement en rotation.
